# DEMANDE DE BREVET EUROPEEN

(11) **EP 2 228 502 A1**
(43) Date de publication de la demande: **15.09.2010**
(21) Numéro de dépôt: 09003426.5
(22) Date de dépôt: 10.03.2009
(51) Int. Cl.: E04D 13/18, H01L 31/042

(54) **Dispositif permettant de fixer des panneaux photovoltaïques sur des tuiles de toit**

(71) Demandeur: Rivot, Mathieu, 78270 Limetz-Villez (FR)
(72) Inventeur: Rivot, Mathieu, 78270 Limetz-Villez (FR)

(57) **Abrégé**

Dispositif permettant de fixer des panneaux photovoltaïques sur des tuiles de toit.

L'invention concerne un dispositif permettant de fixer des panneaux photovoltaïques sur des tuiles de toit ainsi que de connecter ces panneaux pour fournir du courant électrique.

Il est constitué d'un support (1) muni de un ou deux crochets inférieurs (2), et d'un rail (3) muni d'un dispositif « à cliquet » (4). Il se fixe sur la tuile grâce à un crochet supérieur indépendant (5) qui vient s'insérer dans le rail et s'y trouve bloqué par le système à cliquet (4). Sur le support (1), se trouve un panneau photovoltaïque (6) relié aux autres panneaux et au système de récupération du courant électrique par deux fils de raccordement (7) munis de connecteurs (8).

Le dispositif selon l'invention est particulièrement destiné à la pose en toiture de bâtiments.

## Description

### Domaine de l'invention

La présente invention concerne un dispositif permettant de fixer des panneaux photovoltaïques sur des tuiles de toit ainsi que de connecter entre eux ces panneaux afin de fournir du courant électrique destiné au stockage, à une utilisation domestique et/ou à la revente à un fournisseur d'électricité (par exemple EDF pour la France).

### Contexte de l'invention

Il est déjà possible de monter sur la toiture d'habitations des panneaux photovoltaïques de taille plus ou moins grande à l'aide d'un châssis posé sur la charpente. Ce type d'installation se présente comme une masse rectangulaire sombre posée sur la toiture et très inesthétique. Il existe également des « tuiles photovoltaïque » prenant généralement la place de plusieurs tuiles du toit. Ces tuiles photovoltaïques ne peuvent se monter qu'à la condition que le reste des tuiles du toit soit d'un modèle spécifique. Enfin, plusieurs dispositifs de « tuiles photovoltaïques » ont été brevetés, notamment sous les numéros JP 2006 125084 A (TSURUYA CO ; MITSUBISHI HEAVY IND LTD) 18 mai 2006, JP 2005 240524 A (TSURUYA CO) 8 septembre 2005 et WO 02/101839 A (POWERTILE LTD [GB]; MUCCI PETER [GB]) 19 décembre 2002. Ces dispositifs se présentent globalement sous la forme d'un support de forme particulière sur lequel vient se fixer un panneau photovoltaïque, lequel support peut être à son tour installé sur une tuile de toit. Cependant, ces dispositifs ne peuvent être installés que sur des tuiles de forme spécifique. Ainsi, l'installation de ces dispositifs de « tuiles photovoltaïque » sur un bâtiment existant est lié généralement au remplacement des tuiles de la toiture ce qui implique des travaux coûteux.

### Résumé de l'invention

Le dispositif selon l'invention permet de remédier aux inconvénients présentés par les dispositifs existants décrits ci-dessus. Il comporte en effet selon une première caractéristique un panneau photovoltaïque fixé sur un support muni d'un système de crochets permettant de fixer individuellement l'ensemble sur n'importe quel modèle « classique » de tuile de toit (plate ou ronde selon le cas). Ce système de crochets est conçu de manière à permettre un montage aisé du dispositif sur une toiture existante sans nécessiter la dépose des tuiles : le crochet supérieur, indépendant du support, est glissé entre la tuile devant accueillir le dispositif et la tuile immédiatement supérieure par l'intérieur de la toiture. Il vient ainsi se positionner sous le rebord supérieur de la tuile devant accueillir le dispositif. Ce crochet est muni d'une languette percée de petites entailles qui vient se glisser dans le rail situé sur le support du panneau photovoltaïque. Ce rail est muni d'un dispositif « à cliquet » qui empêche la languette du crochet supérieur de ressortir du rail au fur et à mesure qu'elle y est introduite. Le ou les crochets inférieurs du support viennent alors se positionner sous le rebord inférieur de la tuile devant accueillir le dispositif. Les dimensions du support sont variables de manière à ce que le dispositif, une fois posé, recouvre tout ou partie de la surface visible de la tuile de toit sur laquelle il sera installé. L'ensemble, une fois positionné reste alors fermement fixé sur la tuile.

Il est possible de fixer les dispositifs en toiture de manière à dessiner une mosaïque, un damier ou des figures géométriques ce qui permet de conserver, voire d'améliorer l'esthétique de la toiture.

Les panneaux photovoltaïques des dispositifs sont équipés de deux fils de longueur variable munis à leur extrémité de fiches (de type « fiche banane » à titre d'exemple non exhaustif) ou de connecteurs permettant de les connecter aisément entre eux, sous la toiture, en série ou en parallèle (en fonction de la tension désirée en sortie de l'ensemble). Ces fils se glissent, comme le crochet supérieur, entre la tuile sur lequel le dispositif est installé et celle immédiatement supérieure afin de passer sous la toiture.

Selon les modes particuliers de réalisation :
- la partie inférieure du support peut être munie de un ou deux crochets selon qu'il doit être monté sur une tuile ronde ou une tuile plate respectivement.
- dans le cas du montage sur une tuile ronde, le support peut être muni de deux éléments latéraux, qui viennent reposer de part et d'autre de la tuile, pour renforcer sa stabilité.
- le support peut être muni de patins en caoutchouc, ou matériau équivalent, fixés sur partie inférieure, qui permettent d'améliorer l'adhérence avec la tuile.
- les dimensions du support et des crochets doivent être adaptées à celles du modèle de tuile sur lequel le dispositif doit être fixé ; ainsi, le dispositif sera décliné dans une gamme de dimensions variées afin de pouvoir s'adapter sur n'importe quel modèle de tuile.
- la géométrie du support peut être adaptée de manière à ce que le panneau photovoltaïque y repose non plus à plat mais incliné d'un certain angle ; ainsi, il est possible d'optimiser l'angle formé par le panneau photovoltaïque avec l'horizontale, une fois posé en toiture, de manière à ce qu'il capte le maximum d'énergie solaire.
- le support, ainsi que les crochets, peuvent être réalisés par découpe, pliage et soudage de tôle métallique en matériau résistant aux conditions climatiques extérieures (alliages d'acier ou aluminium à titre d'exemples non exhaustifs).

### Brève description des dessins

Les dessins annexés illustrent l'invention :
La figure 1 représente une vue isométrique éclatée du dispositif de l'invention, démonté, avant sa pose.
La figure 2 représente une vue isométrique éclatée d'une variante de ce dispositif, démonté, adapté au montage sur des tuiles rondes.
La figure 3 représente une vue isométrique du dispositif une fois monté sur une toiture composée de tuiles plates. La figure 4 représente une vue isométrique du dispositif une fois monté sur une toiture composée de tuiles rondes. La figure 5 représente un schéma de connexion des dispositifs entre eux, de manière à obtenir la tension continue désirée en entrée de l'onduleur, du chargeur de batteries ou de tout autre appareil alimenté par le dispositif.

En référence à ces dessins, le dispositif comporte un support (1) de forme rectangulaire, muni de quatre rebords (1a, 1b, 1c, 1d) destiné à accueillir un panneau photovoltaïque rectangulaire rigide (6) de mêmes dimensions par emboitement et fixation de celui-ci dans le support (1). Ce support (1) est muni de deux crochets (2) situés de part et d'autre de sa partie inférieure. Ces crochets s'étendent sous ledit support (1) de manière à ce que l'extrémité de ces crochets (2a) vienne se glisser sous le rebord de la tuile sur lequel sera fixé le dispositif. Le support (1) possède également un rail (3) situé dessous et au centre dudit support (1). Ce rail (3) est muni de deux rebords en U (3a, 3b) ainsi que d'un dispositif « à cliquet », constitué d'une languette (4a) et d'une encoche triangulaire (4b), situé à son extrémité supérieure, le long du rebord dudit support (1). Le dispositif comporte également un crochet supérieur indépendant (5) ayant une extrémité supérieure recourbée en forme de U (5a) dont la taille permet de le glisser sous le rebord supérieur de la tuile devant accueillir le dispositif, ainsi qu'une partie droite (5b) de forme plate et munie de petites fentes, dont la largeur et l'épaisseur lui permettent de s'insérer dans le rail (3) et de s'y trouver ensuite bloquée par le système à cliquet (4). Sur le support (1), vient se fixer un panneau photovoltaïque (6) relié à deux fils de raccordement (7) munis de fiches de connexion (8). Le panneau photovoltaïque peut être fixé sur le support à l'aide de petits ergots (9) qui se rabattent sur lui. Le support peut également être équipé de patins de caoutchouc (10). La structure du support est équipée de renforts (11) permettant de le rigidifier.

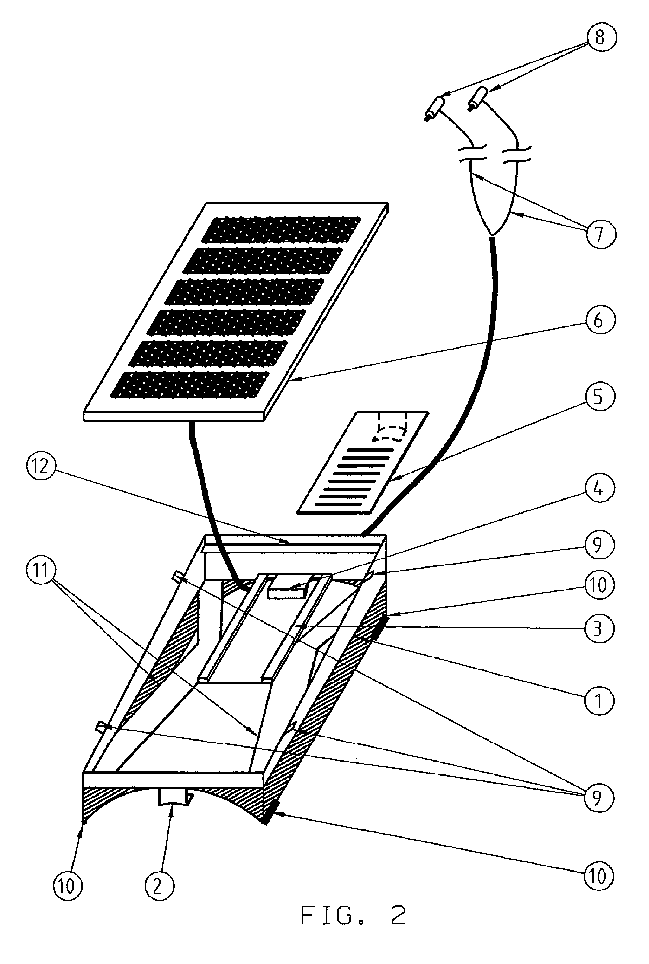

Dans la forme de réalisation selon la figure 2, le support (1) est muni d'un seul crochet inférieur (2) qui peut avoir une forme arrondie adaptée à celle des tuiles rondes. Le crochet supérieur (5) peut également avoir une forme arrondie. La partie supérieure du support (12) est également rehaussée par rapport à sa partie inférieure de sorte que, une fois posé, le panneau photovoltaïque (6) forme l'angle le plus approprié par rapport à l'horizontale afin de capter le maximum d'énergie solaire tout au long de l'année. La longueur et la largeur du support (1), ainsi que la profondeur des crochets (2) et (5) sont variables selon les dimensions et l'épaisseur des tuiles destinées à accueillir le dispositif.

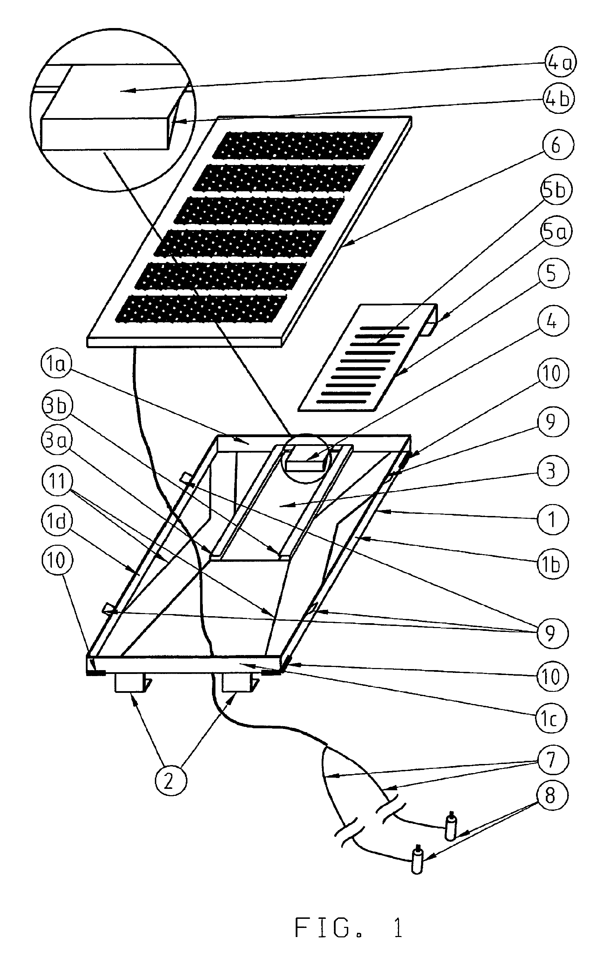

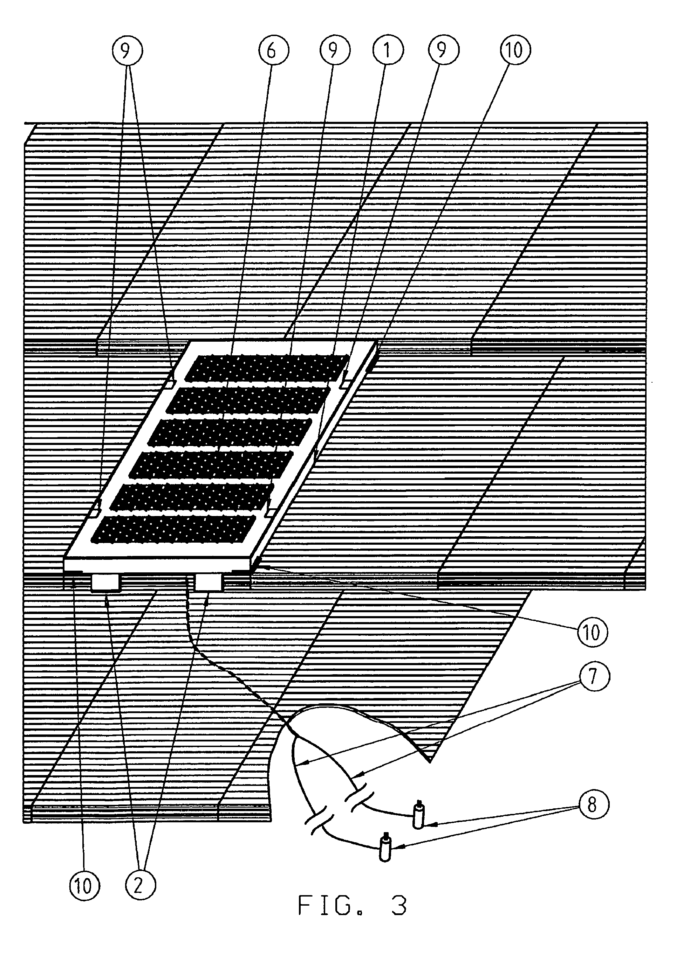

La figure 3 représente l'aspect extérieur final du dispositif de la figure 1 une fois monté sur un toit de tuiles plates. La numérotation des éléments visibles est similaire à celle de la figure 1. Les fils de raccordement (7) ainsi que les connecteurs (8) se retrouvent sous la toiture.

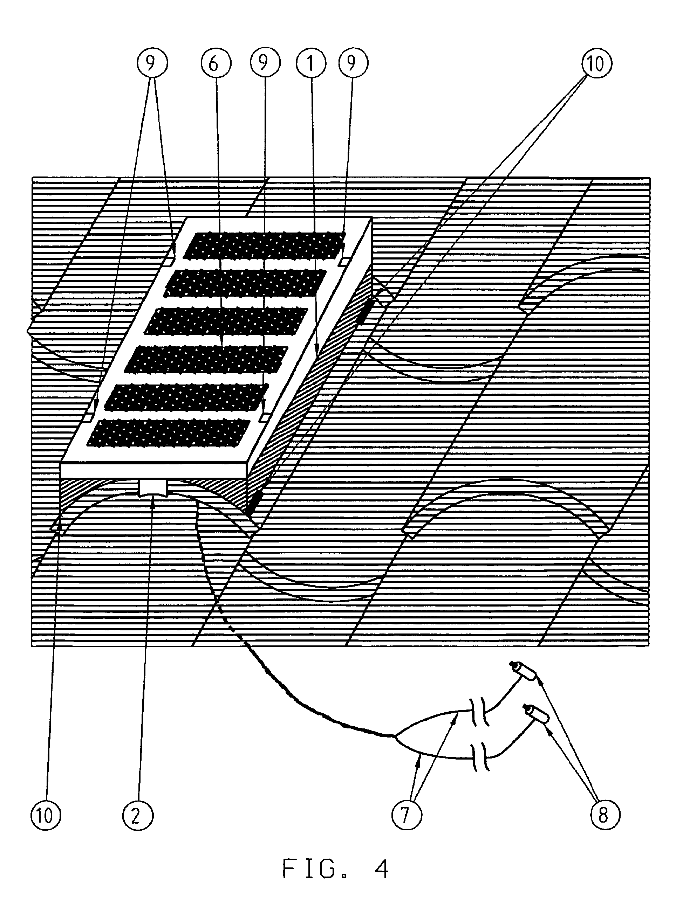

La figure 4 représente l'aspect extérieur final du dispositif de la figure 2 une fois monté sur un toit de tuiles rondes. La numérotation des éléments visibles est similaire à celle de la figure 2. Les fils de raccordement (7) ainsi que les connecteurs (8) se retrouvent sous la toiture.

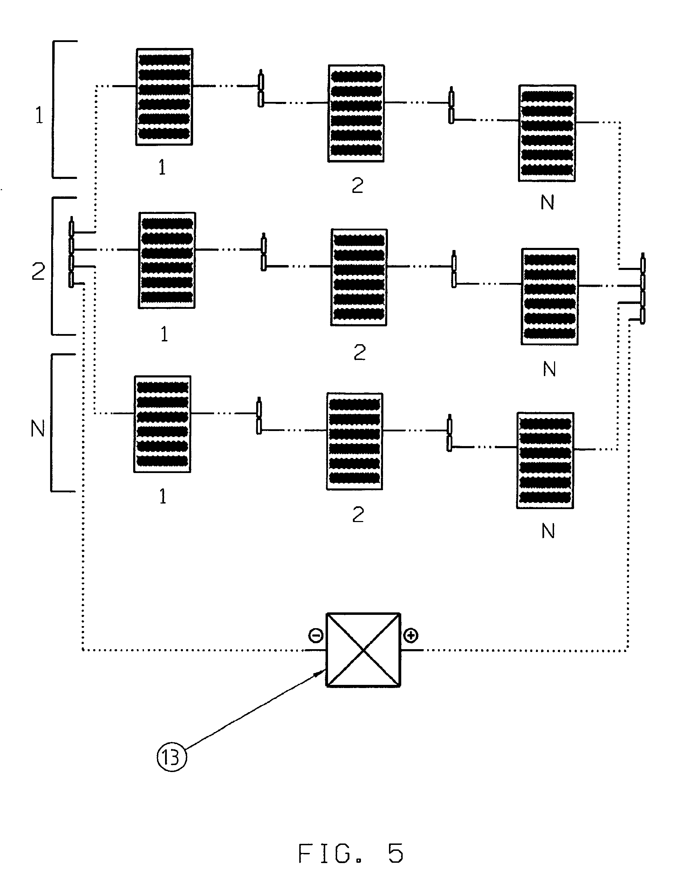

La figure 5 est un schéma de la manière dont les dispositifs peuvent être connectés entre eux (sous la toiture par exemple) de manière à obtenir la tension continue désirée en entrée de l'onduleur, du chargeur de batteries ou de tout autre appareil (13) alimenté par le dispositif. Pour cela, il est possible de connecter N dispositifs en série ou en parallèle comme représenté. L'ensemble est ensuite relié par deux fils conducteurs à l'appareil (13) recevant l'énergie électrique produite.

Le dispositif selon l'invention est particulièrement destiné à la pose en toiture de bâtiments, sur la ou les faces les plus exposées au soleil.

## Revendications

1. Dispositif permettant de fixer des panneaux photovoltaïques sur des tuiles de toit plates « traditionnelles » d'un bâtiment, neuves ou anciennes, ainsi que de connecter entre eux ces panneaux afin de fournir du courant électrique **caractérisé en ce qu'**il comporte un support (1) de forme rectangulaire, muni de quatre rebords (1a, 1b, 1c, 1d) destiné à accueillir un panneau photovoltaïque rectangulaire rigide (6) de mêmes dimensions par emboitement et fixation de celui-ci dans le support (1), ledit support (1) étant muni de deux crochets (2), situés de part et d'autre de sa partie inférieure, s'étendant sous ledit support (1) de manière à ce que l'extrémité de ces crochets (2a) vienne se glisser sous le rebord de la tuile sur lequel sera fixé le dispositif, d'un rail (3) situé dessous et au centre dudit support (1), muni de deux rebords en U (3a, 3b) ainsi que d'un dispositif « à cliquet », constitué d'une languette (4a) et d'une encoche triangulaire (4b), situé à son extrémité supérieure le long du rebord (1a) dudit support (1).

2. Dispositif selon la revendication 1 **caractérisé en ce qu'**il possède un crochet supérieur indépendant (5), ce crochet ayant une extrémité supérieure recourbée en forme de U (5a) dont la taille permet de le glisser sous le rebord supérieur de la tuile devant accueillir le dispositif, ainsi qu'une partie droite (5b) de forme plate et munie de petites fentes, dont la largeur et l'épaisseur lui permettent de s'insérer dans le rail (3) et de s'y trouver ensuite bloquée par le système à cliquet (4).

3. Dispositif selon la revendication 1 **caractérisé en ce qu'**un panneau photovoltaïque (6) peut être fixé sur le support (1) à l'aide de petits ergots (9) qui ont été repliés sur ce dernier.

4. Dispositif selon la revendication 1 **caractérisé en ce que** le support peut être équipé de patins de caoutchouc (10).

5. Dispositif selon l'une quelconque des revendications précédentes **caractérisé en ce que** le support (1) peut être muni d'un seul crochet inférieur (2) ayant une forme arrondie adaptée à celle des tuiles rondes.

6. Dispositif selon la revendication 2 **caractérisé en ce que** le crochet supérieur (5) peut également avoir une forme arrondie.

7. Dispositif selon l'une quelconque des revendications précédentes **caractérisé en ce que** la partie supérieure du support (12) peut être rehaussée par rapport à sa partie inférieure de sorte que, une fois posé, le panneau photovoltaïque (6) forme l'angle le plus approprié par rapport à l'horizontale afin de capter le maximum d'énergie solaire tout au long de l'année.

## Revendications modifiées

### Revendications modifiées conformément à la règle 137(2) CBE.

**1.** Dispositif permettant de fixer des panneaux photovoltaïques sur des tuiles de toit « traditionnelles » d'un bâtiment, neuves ou anciennes, ainsi que de connecter entre eux ces panneaux afin de fournir du courant électrique comprenant un support (1) de forme rectangulaire, muni de quatre rebords (1a, 1b, 1c, 1d) destiné à accueillir un panneau photovoltaïque rectangulaire rigide (6) de mêmes dimensions par emboitement et fixation de celui-ci dans le support (1), ledit panneau photovoltaïque étant relié à deux fils de raccordement (7) munis de fiches de connexion (8) **caractérisé en ce que** ledit support (1) est muni de un ou deux crochets (2), situés respectivement au centre ou de part et d'autre de sa partie inférieure, s'étendant sous ledit support (1) de manière à ce que l'extrémité de ce ou ces crochets (2a) vienne se glisser sous le rebord de la tuile sur lequel sera fixé le dispositif, d'un rail (3) situé dessous et au centre dudit support (1), muni de deux rebords en U (3a, 3b) ainsi que d'un dispositif « à cliquet », constitué d'une languette (4a) et d'une encoche triangulaire (4b), situé à son extrémité supérieure le long du rebord (1a) dudit support (1) ;
le dispositif se fixe grâce à un crochet supérieur indépendant (5), ce crochet ayant une extrémité supérieure recourbée en forme de U (5a) dont la taille permet de le glisser sous le rebord supérieur de la tuile devant accueillir le dispositif, ainsi qu'une partie droite (5b) de forme plate et munie de petites fentes, dont la largeur et l'épaisseur lui permettent de s'insérer dans le rail (3) et de s'y trouver ensuite bloquée par le système à cliquet (4) ;
le panneau photovoltaïque (6) est fixé préférentiellement sur le support (1) à l'aide de petits ergots (9) qui ont été repliés sur ce dernier.

**2.** Dispositif selon la revendication 1 **caractérisé en ce que** le support peut être équipé de patins de caoutchouc (10).

**3.** Dispositif selon l'une quelconque des revendications précédentes **caractérisé en ce que** le support (1) peut être muni d'un seul crochet inférieur ,( 2) ayant une forme arrondie adaptée à celle des tuiles rondes.

**4.** Dispositif selon l'une quelconque des revendications précédentes **caractérisé en ce que** le crochet supérieur (5) peut également avoir une forme arrondie.

**5.** Dispositif selon l'une quelconque des revendications précédentes **caractérisé en ce que** la partie supérieure du support (12) peut être rehaussée par rapport à sa partie in-férieure de sorte que, une fois posé, le panneau photovoltaïque (6) forme l'angle le plus approprié par rapport à l'horizontale afin de capter le maximum d'énergie solaire tout au long de l'année.
